# EUROPEAN PATENT APPLICATION

(11) **EP 3 517 286 A1**
(43) Date of publication of application: **31.07.2019**
(21) Application number: 18202718.5
(22) Date of filing: 25.10.2018
(51) Int. Cl.: B29D 30/26, B29D 30/32

(54) **MOVEABLE COVER PLATE DRIVER UNIT FOR A MECHANICAL TURN-UP BUILDING DRUM**

(30) Priority: 26.01.2018 CN 201810078332
(71) Applicant: TIANJIN SAIXIANG TECHNOLOGY CO., LTD., Huayuan Industry Zone Tianjin New Technology Industry Park Tianjin 300384 (CN)
(72) Inventor: ZHANG, Peng, Tianjin 300384 (CN); JIANG, Jiaming, Tianjin 300384 (CN)
(74) Representative: Kramer Barske Schmidtchen Patentanwälte PartG mbB

(57) **Abstract**

A movable cover plate drive unit for a mechanical turn-up building drum, including guiding plate, end cover, movable cover plate, fixed cover plate, cylinder, rotary ring and several turn-up bars, wherein the moveable cover plate (4) is connected with the slot ring of cylinder through a pin shaft I and is able to rotate around the pin shaft I, and the moveable cover plate is connected with the rotary ring through the pin shaft II (12) , which is located inside the outboard groove of rotary ring; a needle cylinder (13) is fixed on the rotary ring, the piston rod of the needle cylinder is connected with slot ring by pin shaft I (11), and the piston rod of the needle cylinder move reciprocating, which drives the rotary ring turning relative with the slot ring, as well as open/close the moveable cover plate via the pin shaft II.

## Description

### TECHNICAL FIELD

The present invention relates to the field of tire machine which is able to realize the mechanically turn-up building drum, and especially relates to the moveable cover plate of mechanically turn-up building drum, which belongs to the technology field of the tire machinery.

### BACKGROUND

In the process of tire building, when a rubber compound applies on the building drum, it needs one column as the support of applying. Nowadays, for the structure of the turn-up building drum, mostly above the turn-up bar is installed with the telescopic sliding cover plate, which extends out to cover the roller in the front of the turn-up bar, so as compose a column face which is used to apply and stitch the rubber compound, in case of the cover plate retracting, the roller in front of the turn-up bar will be exposed, so as to complete the sidewall turn-up. Because the cover plate is fixed on the turn-up bar, the weight of the turn-up bar will be increased and meanwhile also increase the power for spring reset, which is not good for the tire quality, in the meanwhile, the cover plate is easy to deform, so as to shorten the service lift. In view of the above-mentioned defects, on September 28th 2017, this applicant applied for the invention "One type of mechanically turn-up building drum" with application number of CN 2017108944359, including guiding plate, turn-up bar, moveable cover plate and fixed cover plate. The turn-up bar is located inside the ring groove of the outer circumference of guiding plate. Between the guiding plate and end cover in axial is mounted with the cylinder, which is composed of the barrel, the piston and the slot ring which slides in axial along with the barrel, the fixed cover plate is to fix on the outer circumference of the slot ring, When the moveable cover plate close, the moveable cover plate and the fixed cover plate form a complete column, and pack the turn-up bar inside the column, so as tire building machine can apply rubber and stitching rubber on this column surface, when the moveable cover plate open, the moveable cover plate is located inboard of the fixed cover plate. The roller of the said turn-up bar exposes for turn-up. The positive result includes: With reasonable design structure, the moveable cover plate is separate with the turn-up bar, so as to decrease the weight of the turn-up bar, by using of cylinder moving linearly in shuttle, through transferring the mechanical work, realize the open/close of the moveable cover plate, the moveable cover plate retracts till the inboard of the fixed cover plate, which prevents from deformation and effecting the compound, but the structure of the moveable cover plate drive unit is complicated, featured with high accuracy and difficulty on machining and assembling, which causes the difficulty for the future maintenance and preventatives, as well as week ability to resist interference.

### SUMMARY OF THE INVENTION

The present invention is aimed to provide one moveable cover plate of mechanically turn-up building drum, and is intended to solve the above-described problems such as complicated structure, high accuracy requirement, difficulty for the machining and assembling, difficulty for the future maintenance and preventatives, as well as week ability to resist interference.

To solve the above-described problems, the technical solution is to provide one moveable cover plate of mechanically turn-up building drum, which including guiding plate, end cover, moveable cover plate, fixed cover plate, cylinder, rotary ring and several turn-up bars. Between the guiding plate and end cover in axial is mounted with the cylinder, which is composed of a barrel, a piston and a slot ring. The said fixed cover plate is to fix on the outer circumference of the slot ring. At the end of the said slot ring is mounted with rotary ring, which slides in axial along with the said barrel by driven bearing via the said slot ring.

The said moveable cover plate is to connect with the said slot ring of cylinder through pin shaft I, as well as able to rotate around the pin shaft I. The said moveable cover plate is to connect with the rotary ring through the pin shaft II, which is located inside the outboard groove of rotary ring.

On the said rotary ring is fixed with the needle cylinder which is to connect with the said slot ring at the end of piston rod through the pin shaft I. The said piston rod of the needle cylinder moves in shuttle, which drives the said rotary ring so as to turn relative with the said slot ring, as well as open or close the said moveable cover plate via the pin shaft II.

Further, at the inboard of the said moveable cover plate is fixed rotary ring and fixed ring. The said rotary ring is to connect with the said pin shaft I, and the said fixed ring is to connect with the said pin shaft II.

Further, the said rotary ring is J shape, the round hole at the bottom of J-shape rotary ring is to set on the outer circumference of the said pin shaft I, and one end of the said pin shaft I is fixed on the end face of the said slot ring.

Further, at the inboard of the said moveable cover plate is fixed with the fixing ring, which is connect with the said pin shaft II. One end of the said pin shaft II is located inside the outer groove of the said rotary ring.

Further, the said needle cylinder is fixed on the end face of the said rotary ring, and the needle cylinder is to connect with the said rotary ring through the short pin.

Further, the said the needle cylinder is to be controlled by the independent air supply.

When the said moveable cover plate close, the said moveable cover plate and the said fixed cover plate form a complete column, and pack the said turn-up bar inside the column, so as tire building machine can apply rubber and stitching rubber on this column surface. When the said moveable cover plate open, the said moveable cover plate is located inboard of the said fixed cover plate, and the roller of the said turn-up bar exposes for turn-up.

The present invention has the following advantages: the moveable cover plate of mechanically turn-up building drum possesses reasonable design structure and lower difficulty on machining and assembly, wherein the moveable cover plate and slot ring move separately easily in control, the drive chain of the movable cover plate is shorter so as to improves the stress condition, and the slot ring is able to completely separate from the moveable cover plate in facility so as to ease to the further maintenance.

### BRIEF DESCRIPTION OF THE DRAWINGS

Fig. 1 is the structure of cylinder on the moveable cover plate drive unit of the mechanical turn-up building drum of the invention.
Fig. 2 is the structure of Moveable cover plate of the invention at close status
Fig. 3 is the Fig 2 in left view of the invention (exclude the guiding plate).
Fig. 4 is the mounting structure for the needle cylinder of the invention.
Fig 5 is the structure of the movable cover plate of the invention at open status, with the turn-up bar exposed.
Fig 6 is the Fig 5 in left view of the invention (exclude the guiding plate).

As shown in FIGS: 1. Guiding plate, 2. turn-up bar, 3. fixed cover plate, 4. movable cover plate, 5. cylinder, 6. piston, 7. slot ring, 8. cylinder barrel, 9. drive bearing, 10. rotary ring, 11. pin shaft I, 12. pin shaft II, 13. needle cylinder, 14. air tube, 15. pneumatic joint I, 16. pneumatic joint II, 17. pneumatic joint III, 18. short pin, 19. rotary ring, 20. the fixed ring, 21. end cover.

### DETAILED DESCRIPTION

For better understanding of the purpose, technical solution and advantage of the present invention, the invention is further illustrated in detail below in conjunction with the accompanying drawings and embodiments. It should be understood that the specific embodiments described here are only for explanation and not for limiting the scope of the present invention.

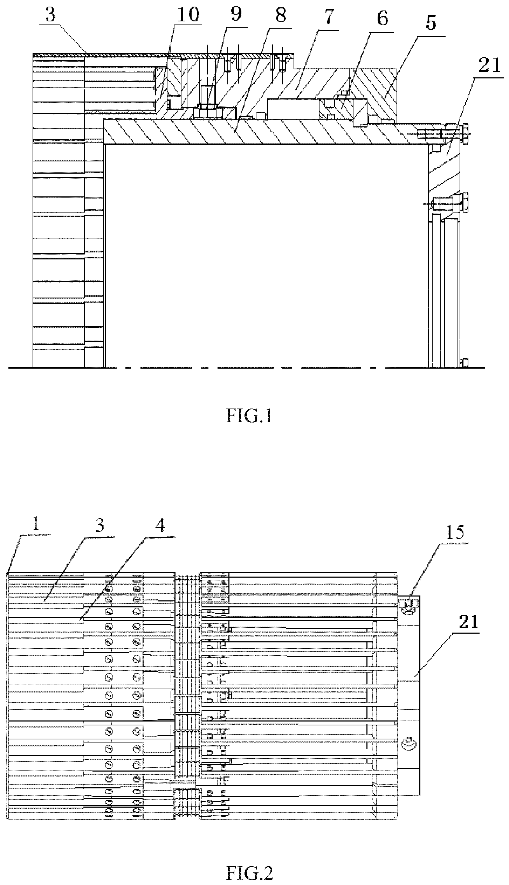

As shown in FIG. 1 and FIG.2, The movable cover plate drive unit for the mechanical turn-up building drum is to be composed of guiding plate 1, turn-up bar[several turn-up bars] 2, fixed cover plate 3, movable cover plate 4, cylinder 5, rotary ring 10 and end cover 21. Between the said guiding plate 1 and end cover 21 axially is mounted with cylinder 5, which includes the [a] piston 6, the [a] slot ring 7 and the [a] barrel 8. The said fixed cover plate 3 is to fix on the outer circumference of the slot ring 7. At the end of the said slot ring 7 is mounted with rotary ring 10, which slides in axial along with the barrel 8 of cylinder driven by bearing [by driven bearing] 9 via the said slot ring 7.

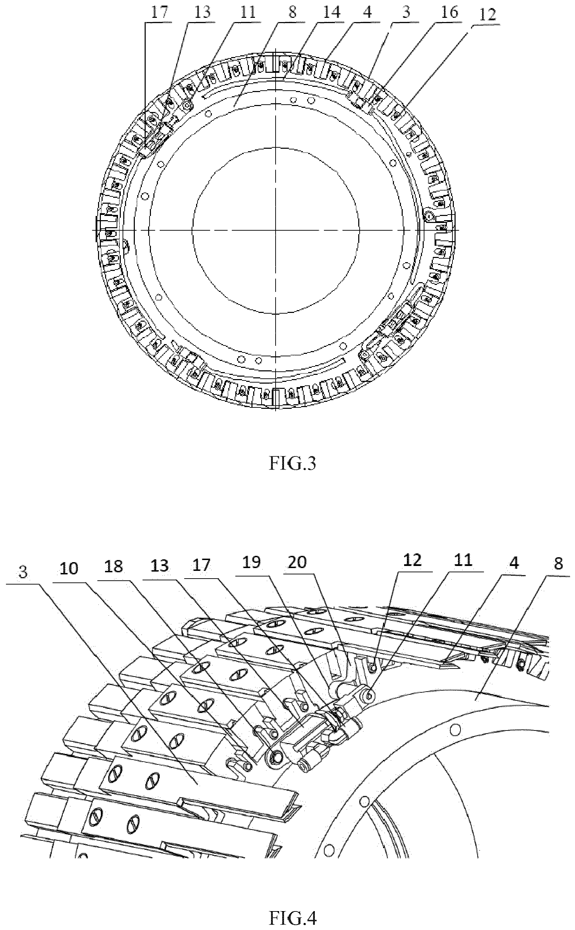

As shown in FIG.3, FIG.4 and FIG.6, the said moveable cover plate 4 is to connect with the said slot ring 7 through pin shaft I 11 as well as able to rotate around the pin shaft I 11. The said moveable cover plate 4 is to connect with the rotary ring 10 through the pin shaft II 12, which is located inside the outboard groove of rotary ring 10.

In an aspect of this embodiment, at the inboard of the said moveable cover plate 4 is fixed rotary ring 19 and fixed ring 20. The said rotary ring 19 is to connect with the said pin shaft I 11. The said fixed ring 20 is to connect with the said pin shaft II 12.

In an aspect of this embodiment, the said rotary ring 19 is J shape; the round hole at the bottom of J-shape rotary ring is to set on the outer circumference of the said pin shaft I 11, and one end of the said pin shaft I 11 is fixed on the end face of the said slot ring 7.

At the inboard of the said moveable cover plate 4 is fixed with the fixing ring 20, which is to connect with the said pin shaft II 12. One end of the said pin shaft II 12 is located inside the outer groove of the said rotary ring 10.

As shown in FIG.4, on the end face of the said rotary ring 10 is fixed with the needle cylinder 13 which is to connect with the said slot ring 7 at the piston end [end of piston rod] through the pin shaft I 11. The said piston rod of the needle cylinder 13 move in shuttle, which drives the said rotary ring 10 so as to turn relative with the said slot ring 7, as well as open or close the said moveable cover plate 4 via the pin shaft II 12.

In an aspect of this embodiment, the said needle cylinder 13 is fixed on the face of the said rotary ring 10; the needle cylinder 13 is to connect with the said rotary ring 10 through the short pin 12. The said the needle cylinder 13 is to be controlled by the independent air supply.

When the said moveable cover plate close, the said moveable cover plate 4 and the said fixed cover plate 3 form a complete column, and pack the said turn-up bars inside the column, so as tire building machine can apply rubber and stitching rubber on this column surface (see FIG. 2 and FIG. 3). When the said moveable cover plate open, the said moveable cover plate is located inboard of the said fixed cover plate, and the roller of the said turn-up bars exposes for turn-up refer to attached drawings 5 and 6.

By using of this invention, moveable cover plate drive unit of the mechanical turn-up building drum, it can realize the application, stitching and turn-up for carcass.

When applying, the needle cylinder 13 extends out. The said slot ring 7 turns relatively with the said rotary ring 10. The moveable cover plate 40 close, and then the moveable cover plate 4 and the fixed cover plate 3 form a complete column. Under the action of cylinder 5, the slot ring 7 drives the said fixed cover plate 3 and the moveable cover plate 4 moving towards the guiding plate, as well as the fixed cover plate 3 and the moveable cover plate 4 are against tightly the end face of the guiding plate 1, as shown the FIG. 2 and FIG. 3, and in this case it is able to perform the application and stitching.

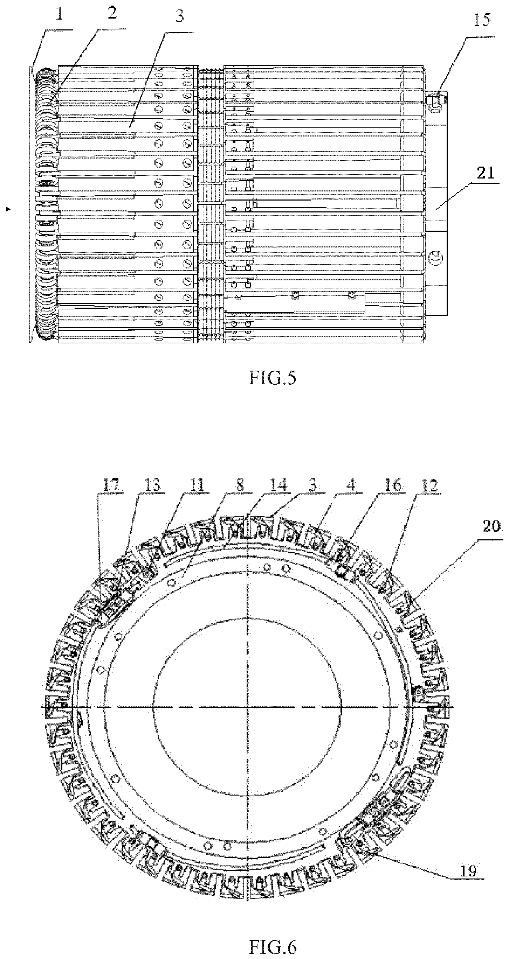

When turning-up, under the action of the cylinder 5, the slot ring 7drives the said fixed cover plate 3 and the moveable cover plate 4 moving away from the guiding plate 1, with the roller of the turn-up bar [turn-up bars] 2 exposed as shown the FIG.5. The air come from outside goes into the union II 16 via the air hole of the slot ring 7 through the pneumatic joint I 15 at the tail, and goes into the pneumatic joint III 17 through the air pipe 14 from the pneumatic joint II 16, and then goes inside the needle cylinder 13 through the pneumatic joint III 17. The rotary ring 10 rotates with the piston rod of the needle cylinder 13 retracted. The moveable cover plate 4 is able to rotate driven by the groove of the rotary ring 10 in match with the pin shaft II 12. With the moveable cover plate 4 rotating, it causes the clearance with the fixed cover plate 3, so as to reserve the space for the turn-up bars 2 lifting up as shown the FIG. 6, in order to turn-up.

At [After] the completion of turn-up, the air come from outside goes into the pneumatic joint II 16 via the air hole of the slot ring 7 through the pneumatic joint I 15 at the tail, and goes into the pneumatic joint III 17 through the air pipe 14 from the pneumatic joint II 16; and then goes inside the needle cylinder 13 through the pneumatic joint III 17. The rotary ring 10 rotates with the piston rod of the needle cylinder 13 retracted. The moveable cover plate 4 is able to rotate driven by the groove of the rotary ring 10 in match with the pin shaft II 12. With the moveable cover plate 4 rotating, it forms a complete column with the fixed cover plate 3. The cylinder 5 changes the direction again. Driven with the slot ring 7, the fixed cover plate 3 and the moveable cover plate 4 move towards the guiding plate 1 so as to form a circular surface to cover the turn-up bars 2, ready for the next application and stitching, as shown FIG.2 and FIG.3.

The moveable cover plate drive unit of the mechanical turn-up building drum of the invention, is able to cover the roller of turn-up bars, through the rotation and the axial movement of the moveable cover plate; the rotation of the moveable cover plate is to controlled by the independent air supply, and separate from the slot ring in axial, in facility to operation and control, wherein less drive steps so as to shorten the drive chain and improves the stress condition, effectively lower the difficulty on machining and assembly, and the slot ring is able to completely separate from the moveable cover plate in facility to the further maintenance.

It should be noted that the said embodiments is an example rather than a restriction of the invention. Technical personnel in this field will be able to design a number of alternative embodiments without departing from the scope of the patent.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An movable cover plate drive unit for the mechanical turn-up building drum, which including guiding plate, end cover, moveable cover plate, fixed cover plate, cylinder, rotary ring and several turn-up bars, wherein between the guiding plate and end cover in axial is mounted with the cylinder, which is composed of a barrel, a piston and a slot ring, and the said fixed cover plate is to fix on the outer circumference of the slot ring, and the said fixed cover plate is to fix on the outer circumference of the slot ring, and at the end of the said slot ring is mounted with rotary ring, which slides in axial along with the said barrel by driven bearing via the said slot ring, **characterized in that**, the said moveable cover plate is to connect with the said slot ring of cylinder through pin shaft I, as well as able to rotate around the pin shaft I, and the said moveable cover plate is to connect with the rotary ring through the pin shaft II, which is located inside the outboard groove of rotary ring,
and on the said rotary ring is fixed with the needle cylinder which is to connect with the said slot ring at the end of piston rod through the pin shaft I, wherein the said piston rod of the needle cylinder moves in shuttle, which drives the said rotary ring so as to turn relative with the said slot ring, as well as open or close the said moveable cover plate via the pin shaft.

2. The movable cover plate drive unit for the mechanical turn-up building drum of Claim 1, **characterized in that**, at the inboard of the said moveable cover plate is fixed rotary ring and fixed ring, and the said rotary ring is to connect with the said pin shaft I, and the said fixed ring is to connect with the said pin shaft II.

3. The movable cover plate drive unit for the mechanical turn-up building drum of Claim 2, **characterized in that**, the said rotary ring is J shape, the round hole at the bottom of J-shape rotary ring is to set on the outer circumference of the said pin shaft I, and one end of the said pin shaft I is fixed on the end face of the said slot ring.

4. The movable cover plate drive unit for the mechanical turn-up building drum of Claim 2, **characterized in that**, at the inboard of the said moveable cover plate is fixed with the fixing ring, which is connect with the said pin shaft II, and tne end of the said pin shaft II is located inside the outer groove of the said rotary ring.

5. The movable cover plate drive unit for the mechanical turn-up building drum of Claim 3 or 4, **characterized in that**, the said needle cylinder is fixed on the end face of the said rotary ring, and the needle cylinder is to connect with the said rotary ring through the short pin.

6. The movable cover plate drive unit for the mechanical turn-up building drum of Claim 5, the said the needle cylinder is to be controlled by the independent air supply.

7. The movable cover plate drive unit for the mechanical turn-up building drum of Claim 6, when the said moveable cover plate close, the said moveable cover plate and the said fixed cover plate form a complete column, and pack the said turn-up bar inside the column, so as tire building machine can apply rubber and stitching rubber on this column surface, and when the said moveable cover plate open, the said moveable cover plate is located inboard of the said fixed cover plate, and the roller of the said turn-up bar exposes for turn-up.
